# EUROPÄISCHE PATENTSCHRIFT

(11) **EP 1 022 211 B1**
(45) Veröffentlichungstag und Bekanntmachung des Hinweises auf die Patenterteilung: **06.08.2003**
(21) Anmeldenummer: 99124830.3
(22) Anmeldetag: 14.12.1999
(51) Int. Cl.: B62D 21/15, B62D 21/11

(54) **Kraftfahrzeug mit Achshilfsträger**
Vehicle comprising a sub-frame for mounting suspension
Véhicule aveec un chassis auxiliaire pour la suspension de roues

(30) Priorität: 19.01.1999 DE 19901849
(43) Veröffentlichungstag der Anmeldung: 26.07.2000
(73) Patentinhaber: Volkswagen Aktiengesellschaft, 38436 Wolfsburg (DE)
(72) Erfinder: Krüger, Helmut, 38442 Wolfsburg (DE)

(56) Entgegenhaltungen:
- DE-A- 4 230 722
- US-A- 5 492 193

## Beschreibung

Die vorliegende Erfindung bezieht sich auf ein Kraftfahrzeug gemäß dem Oberbegriff des Patentanspruches 1 und zielt auf einen verbesserten Achshilfsträger ab.

Ein gattungsgemäßes Kraftfahrzeug ist aus der DE 42 30 722 A1 bekannt. Dort weist ein Hilfsrahmen eine Abschrägung an seiner Vorderseite, d.h. der dem Motor bzw. dem Getriebe zugewandten Seite auf. Bei einem Frontalcrash wird der Motor/Getriebekomplex nach hinten verlagert und kann über eine entsprechende Gegengleitfläche an der Abschrägung nach unten und hinten abgleiten. Ein Eindringen des Motor/Getriebekomplexes in den Fußraum der Fahrgastzelle wird dadurch verhindert.

Der bekannte Hilfsrahmen besitzt den Nachteil, daß die Ablenkflächen eine relativ geringe Erstreckung aufweisen, so daß bei einem Unfall nicht sichergestellt ist, daß die Ablenkflächen die erwünschte Wirkung erzielen. Zudem können bei einem Frontalcrash Teile des Motor/Getriebekomplexes an dem Achshilfsträger vorbei (oberhalb) verlagert werden.

Weiterhin ist aus der US 5,492,193 A bekannt, an Fahrzeugen mit einem sehr kurzen Vorderwagen die Spritzwand als Ablenkfläche auszubilden und gegen ein Eindringen des Motor/Getriebekomplexes zu versteifen.

Es ist daher die Aufgabe der vorliegenden Erfindung, ein Kraftfahrzeug zu schaffen, bei dem bei einem Unfall eine gezielte Ablenkung eines Motor/Getriebekomplexes über den Hilfsrahmen möglich ist.

Diese Aufgabe wird durch ein Kraftfahrzeug mit den Merkmalen des Patentanspruchs 1 gelöst.

Vorteilhafte Ausgestaltungen der Erfindung sind in den weiteren Patentansprüchen angegeben.

Nachfolgend wird die Erfindung anhand eines in der Zeichnung dargestellten Ausführungsbeispiels näher erläutert. Die Zeichnung zeigt in:
- Figur 1: eine schematische perspektivische Ansicht eines Teils einer Karosserie eines Kraftfahrzeuges mit einem Hilfsrahmen gemäß der vorliegenden Erfindung,
- Figur 2: eine schematisierte Seitenansicht eines Kraftfahrzeuges im Bereich des Hilfsrahmen nach Figur 1,
- Figur 3: eine schematische Ansicht von schräg oben, entsprechend dem Pfeil R in Figur 2,
- Figur 4: mehrere Schnittdarstellungen von Führungseinrichtungen nach der vorliegenden Erfindung, und in

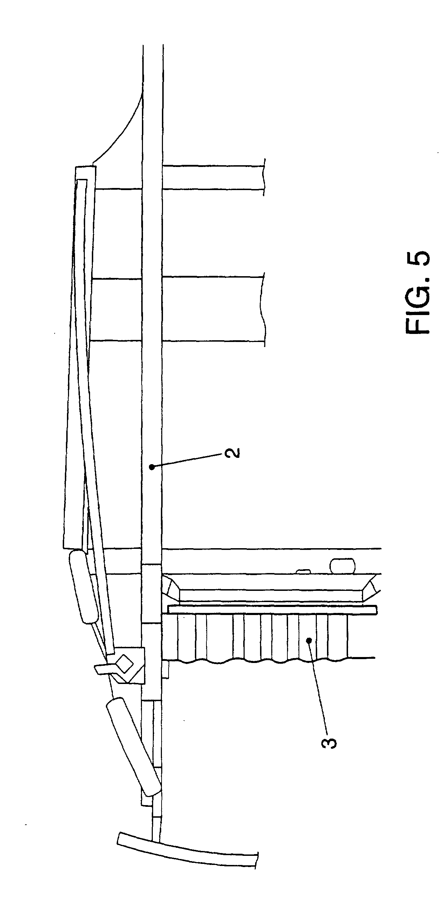

- Figur 5: eine Draufsicht auf die Teile der Karosserie nach Figur 1.

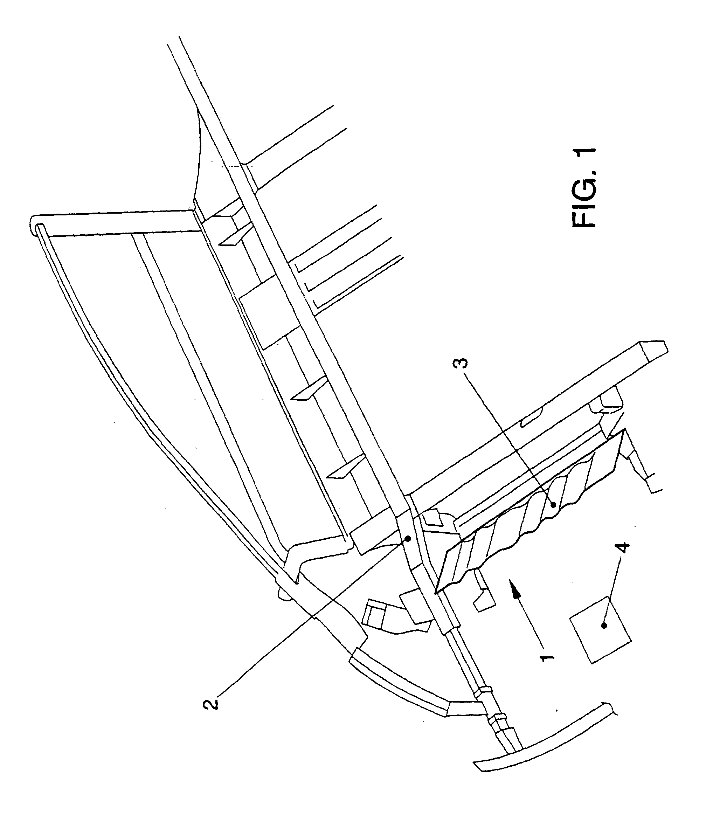

In Figur 1 ist in einer perspektivischen Ansicht ein Teil einer Karosserie eines Kraftfahrzeugs dargestellt. Ein Vorderwagen des Kraftfahrzeugs umfaßt dabei Längsträger 2, von denen nur der rechte in Fahrtrichtung des Kraftfahrzeugs, d.h. in Figur 1 links, zeichnerisch dargestellt ist. Zwischen den beiden Längsträgern 2 ist quer verlaufend ein Hilfsrahmen 1 angeordnet, der zwischen einem Motor/Getriebekomplex 4 und der Fahrgastzelle eingebaut ist.

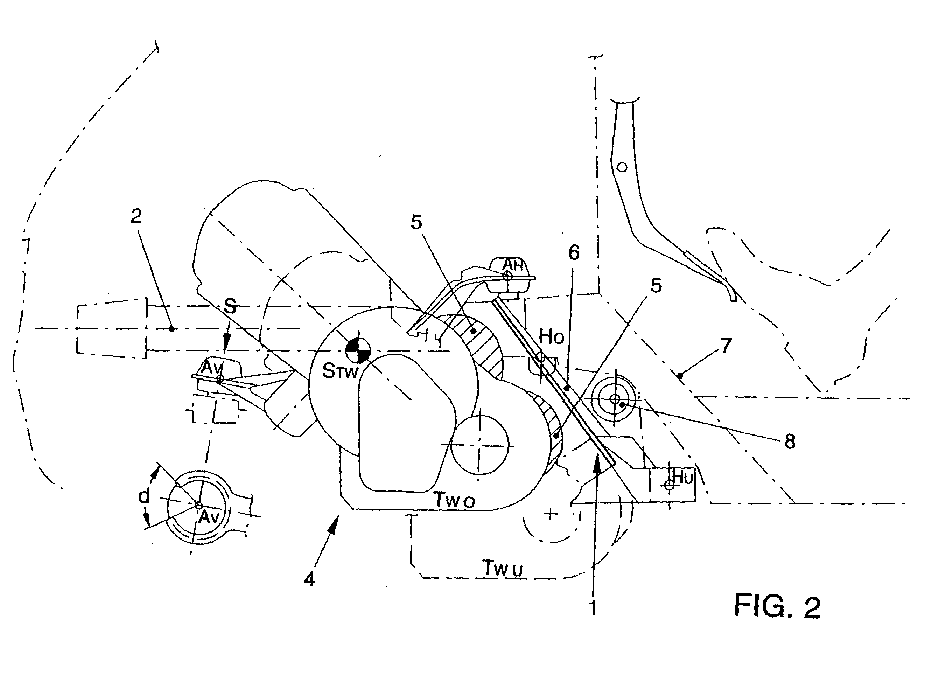

Der Hilfsrahmen 1 soll ganz allgemein die Struktur der Karosserie in diesem Bereich des Kfz verstärken und kann zur Anordnung von Aggregaten, wie etwa einem Lenkgetriebe 8 (siehe Figur 2) oder als Montageträger für eine Radführung dienen.

Bei der vorliegenden Erfindung ist der Hilfsrahmen 1 mit einem Flächenabschnitt 3 versehen, der eine Profilierung aufweist und der eine, verglichen mit dem Stand der Technik, relativ große Erstreckung aufweist, und zwar in dem Bereich, in dem der Motor/Getriebekomplex bei einem Unfall (Frontalcrash) auf den Hilfsrahmen 1 auftrifft.

In der in den Figuren dargestellten Ausführungsform ist dieser Flächenabschnitt 3 als gewelltes Crashschild einstückig mit dem Hilfsrahmen 1 ausgebildet.

Auf der Rückseite des Hilfsrahmens 1 ist eine Mehrzahl von Verstärkungsrippen 6 vorgesehen. Der Flächenabschnitt 3 ist in Fahrtrichtung nach hinten unten geneigt verlaufend positioniert, um den bei einem Unfall nach hinten sich verlagernden Motor/Getriebekomplex 4 nach unten zu verlagern. In der Figur 2 ist der Motor/Getriebekomplex 4 im Normalzustand mit durchgezogenen Linien two dargestellt und der Fall, wenn nach einem Unfall der Motor/Getriebekomplex 4 nach hinten und unten verlagert ist, ist mit gestrichelten Linien two angedeutet.

Der mit einer Profilierung, vorzugsweise einer Wellung, versehene Flächenabschnitt 3 des Hilfsrahmens 1 erstreckt sich von einem Längsträger 2 bis zu dem anderen, gegenüberliegenden Längsträger des Kfz. Nachdem auch die Höhenerstreckung des Flächenabschnitts 3 über im wesentlichen die vollständige Höhe des Motor/Getriebekomplexes 4 erfolgt, können keine Teile des Motor/Getriebekomplexes 4 an dem Flächenabschnitt 3 vorbei in Richtung Fahrgastzelle gelangen.

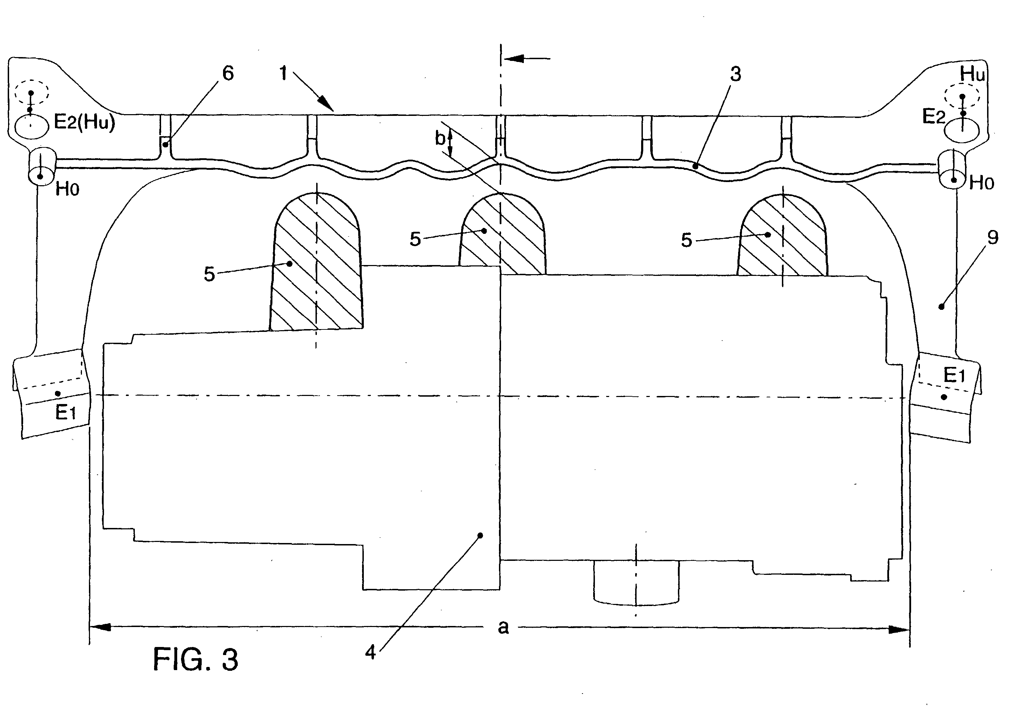

Der Hilfsträger 1 ist fahrzeugheckseitig an einem Querlenkerpunkt E2 (siehe Figuren 2 und 3) befestigt. Dort treffen sich der Pedalboden 7, ein Schwellerbauteil, die A-Säule des Kfz und der Längsträger 2. Diese Stelle ist somit besonders stabil ausgeführt und damit geeignet, die hohen Kräfte aufzunehmen, die bei einem Unfall freigesetzt werden. Im vorderen Bereich ist der Hilfsträger 1 an dem Längsträger 2 auf beiden Seiten befestigt. An diesen Stellen ist ein Formschluß zwischen Hilfsträger 1 und Befestigung am Längsträger 2 vorgesehen, so daß eine große Krafteinleitung ermöglicht ist.

Die Wellung in der gezeigten Ausführungsform verläuft in Fahrzeuglängsrichtung an dem Flächenabschnitt 3 und stellt mit ihren Wellentälern eine Führungsbahn bzw. eine Mehrzahl von Führungsbahnen für den Motor/Getriebekomplex 4 dar. Zudem bewirkt die Profilierung einer Verstärkung des Flächenabschnitts 3, d.h. eine Erhöhung der Widerstandsfähigkeit gegenüber Verformungskräften.

In einer weiteren, bevorzugten Ausführungsform nach der vorliegenden Erfindung ist daher an dem Motor/Getriebekomplex 4 eine Mehrzahl von Führungseinrichtungen 5 vorgesehen, die im Zusammenwirken mit der Profilierung des Flächenabschnitts 3 das gezielte Ablenken des Motor/Getriebekomplexes 4 weiter verbessern.

An der Rückseite des Motor/Getriebekomplexes 4, d.h. auf der Seite, die dem Flächenabschnitt 3 zugewandt ist, sind die Führungseinrichtungen 5 in Form von Kufen vorgesehen, die eine Querschnittsform aufweisen (siehe Figur 3), die der Profilierung des Flächenabschnitts 3 entspricht, d.h., daß jede Führungseinrichtung 5 einem Wellental zugeordnet ist. Im Normalzustand liegt zwischen jeder Führungseinrichtung 5 und dem Flächenabschnitt 3 ein Mindestabstand b vor.

Bei einem Unfall, insbesondere einem Frontalcrash, wird der Motor/Getriebekomplex 4 durch die Wucht des Aufpralls nach hinten verlagert und die Führungseinrichtungen 5 gelangen mit dem Flächenabschnitt 3 des Hilfsrahmens 1 in Anlage. Durch die schräge, d.h. geneigt nach hinten und unten verlaufende Anordnung des Flächenabschnitts 3 wird auch der Motor/Getriebekomplex 4 mittels der Führungseinrichtungen 5 nach hinten und unten geführt, so daß ein Eindringen in den Fußraum der Fahrgastzelle verhindert wird.

Unterstützt wird diese gezielte Aus- bzw. Ablenkung des Motor-/Getriebekomplexes 4 durch eine geneigte Anordnung des Motor/Getriebekomplexes 4, wie es in der Figur 2 dargestellt ist, sowie durch eine Ausbildung des Motor/Getriebekomplexes 4, die auf der Rückseite eine möglichst flächige, ebene Struktur aufweist. An Positionen am Motor/Getriebekomplex 4, die dem Flächenabschnitt 3 gegenüberliegen, befinden sich die Führungseinrichtungen 5. Zumindest sollten 2 Kufen, nach der Figur 3 sind es bevorzugt drei Kufen, vorgesehen werden, die entweder in das Gehäuse des Motor/Getriebekomplexes 4 integriert sein können, oder die dort mittels einer Befestigungseinrichtung 10 angebracht sein können.

Die Form dieser Kufen ist so zu wählen, daß eine möglichst große Anlagefläche relativ zum Flächenabschnitt 3 des Hilfsrahmens 1 vorliegt, so daß daraus eine möglichst kleine Flächenpressung resultiert.

Vorzugsweise können die Führungseinrichtungen 5 verschwenkbar an dem Motor/Getriebekomplex 4 angeordnet sein, und um den Reibwiderstand zwischen Flächenabschnitt 3 und Führungseinrichtung 5 weiter zu vermindern, können auch Rollen an dieser Stelle vorgesehen sein.

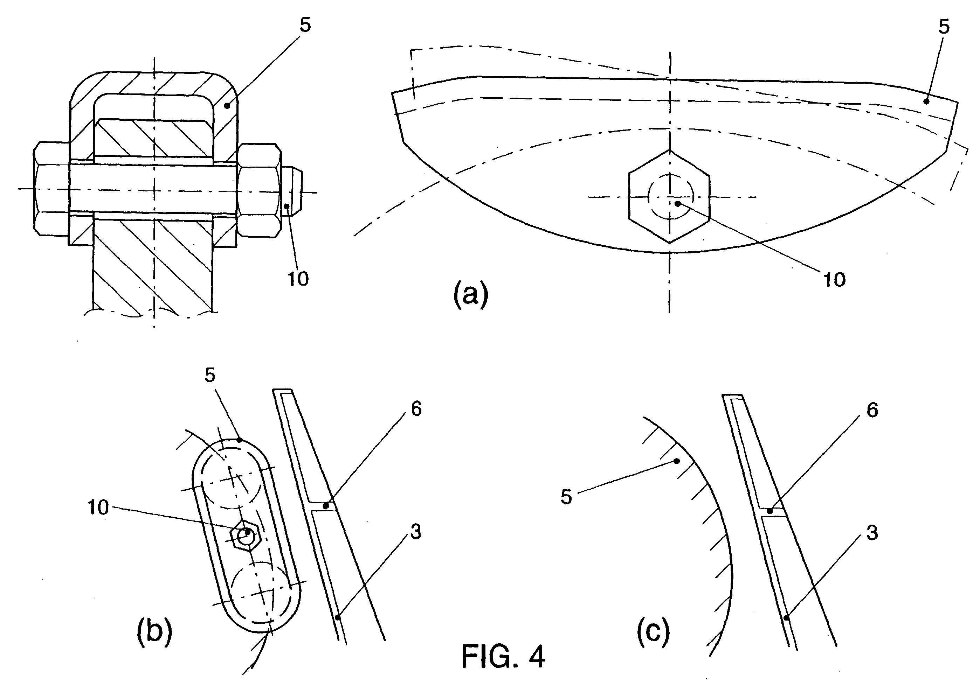

Hierzu wird auf die Figuren 4 verwiesen; in der Figur 4(a) und 4(c) ist jeweils eine Führungseinrichtung 5 in Form einer verschwenkbaren Kufe dargestellt, die mittels der Befestigungseinrichtung 10 (Schraubbolzen mit Mutter) an dem Motor/Getriebekomplex 4 angebracht ist. In der Figur 4(b) ist eine zweiachsige Rollenanordnung als Führungseinrichtung 5 vorgesehen, die ebenfalls mittels der Befestigungseinrichtung 10 an dem Motor/Getriebekomplex 4 angebracht ist.

Das Verschwenken der Führungseinrichtungen 5 ist vorgesehen, um einen Winkelausgleich zu schaffen, der auftritt, wenn sich der Motor/Getriebekomplex 4 bei einem Unfall um einen nicht definierbaren Winkel aufrichtet und er trotzdem zuverlässig an dem Flächenabschnitt 3 abgelenkt werden soll.

Der Flächenabschnitt 3 ist vorzugsweise um einen Winkel von maximal 45° zur Fahrbahn geneigt. Der Schwerpunkt S_{TW} des Motor/Getriebekomplexes 4 sollte möglichst unterhalb des vorderen Befestigungspunktes Ho für den Hilfsrahmen 1 liegen, um ein Auffangen des Motor/Getriebekomplexes 4 durch den Hilfsrahmen 1 zu gewährleisten.

Der Hilfsrahmen 1 sollte sich vorzugsweise über die gesamte Breite zwischen den Längsträgern 2 erstrecken, d.h. eine Mindestbreite a (Fig. 3) aufweisen.

Somit weist ein Achshilfsträger, der insbesondere für einen Vorderwagen eines Kraftfahrzeuges vorgesehen ist, einen Hilfsrahmen 1 auf, der quer zwischen Längsträgern 2 des Vorderwagens angeordnet ist, wobei dieser Hilfsrahmen 1 einen Flächenabschnitt 3 umfaßt, der einem Motor/Getriebekomplex 4 zugewandt ist und der nach unten und hinten schräg verlaufend angeordnet ist, so daß dadurch eine Ablenkebene für den Motor/Getriebekomplex 4 definiert ist, und wobei dieser Flächenabschnitt 3 eine im wesentlichen in Längsrichtung des Kraftfahrzeuges verlaufende Profilierung aufweist.

Hinsichtlich vorstehend im einzelnen nicht näher erläuterter Merkmale der Erfindung wird in übrigen ausdrücklich auf die Ansprüche und die Zeichnungen verwiesen.

### BEZUGSZEICHENLISTE

- 1: Hilfsrahmen
- 2: Längsträger
- 3: Flächenabschnitt
- 4: Motor/Getriebekomplex
- 5: Führungseinrichtung(en)
- 6: Verstärkungsrippen
- 7: Pedalboden
- 8: Lenkgetriebe
- 9: Radführung
- 10: Befestigungseinrichtung

- a: Mindestbreite
- b: Mindestabstand
- E1: Lenkeraufnahmepunkt(e)
- E2: Querlenkerpunkt(e)
- Ho: Befestigungspunkt
- S_{TW}: Schwerpunkt (Triebwerk)

## Patentansprüche

1. Kraftfahrzeug, umfassend:
- zwei Längsträger (2) am Vorderwagen,
- einen Motor/Getriebekomplex (4), und
- einen Hilfsrahmen (1), der quer zwischen den Längsträgern (2) des Vorderwagens angeordnet ist und einen Flächenabschnitt (3) aufweist, der dem Motor/Getriebekomplex (4) zugewandt nach unten und hinten schräg verlaufend angeordnet ist, um eine Ablenkebene für den Motor/Getriebekomplex (4) zu definieren,
**dadurch gekennzeichnet, daß**
der Flächenabschnitt (3) eine in Längsrichtung des Kraftfahrzeuges verlaufende Profilierung aufweist.

2. Kraftfahrzeug nach Anspruch 1, **dadurch gekennzeichnet, daß** der Hilfsrahmen (1) und der Flächenabschnitt (3) einstückig ausgebildet sind.

3. Kraftfahrzeug nach Anspruch 1 oder 2, **dadurch gekennzeichnet, daß** die Profilierung eine Wellung ist.

4. Kraftfahrzeug nach einem der Ansprüche 1 bis 3, **dadurch gekennzeichnet, daß** der Flächenabschnitt (3) auf seiner, dem Motor/Getriebekomplex (4) abgewandten Rückseite eine Mehrzahl von Verstärkungsrippen (6) aufweist.

5. Kraftfahrzeug nach einem der Ansprüche 1 bis 4, **dadurch gekennzeichnet, daß** der Hilfsrahmen (1) fahrzeugheckseitig an einem Querlenkerpunkt (E2) befestigt ist, in dem sich ein Pedalboden (7), ein Schweller, eine A-Säule und der Längsträger (2) überschneiden.

6. Kraftfahrzeug nach Anspruch 5, **dadurch gekennzeichnet, daß** im Querlenkerpunkt jeweils ein Formschluß zwischen dem Hilfsrahmen (1) und dem Längsträger (2) vorliegt.

7. Kraftfahrzeug nach einem der Ansprüche 1 bis 6, **dadurch gekennzeichnet, daß** ein Lenkgetriebe (8) in den Hilfsrahmen (1) integriert ist.

8. Kraftfahrzeug nach einem der Ansprüche 1 bis 7, **dadurch gekennzeichnet, daß** ( der Hilfsrahmen (1) als Montageträger für ein Lenkgetriebe (8) oder eine Radführung (9) dient.

9. Kraftfahrzeug nach einem der Ansprüche 1 bis 8, **dadurch gekennzeichnet, daß** der Flächenabschnitt (3) in Kraftfahrzeugquerrichtung eine Mindestbreite (a) aufweist, die dem lichten Abstand zwischen den Lenkeraufnahmepunkten (E1) entspricht.

10. Kraftfahrzeug nach einem der Ansprüche 1 bis 9, **dadurch gekennzeichnet, daß** an der Rückseite des Motor/Getriebekomplexes (4), die dem Hilfsrahmen (1) zugewandt ist, eine Mehrzahl von Führungseinrichtungen (5) vorgesehen ist, die im Zusammenwirken mit der Profilierung des Flächenabschnitts (3) eine vorbestimmte Verlagerung des Motor/Getriebekomplexes (4) bei einem Frontalcrash des Kraftfahrzeuges bewirkt.

11. Kraftfahrzeug nach Anspruch 10, **dadurch gekennzeichnet, daß** die Führungseinrichtungen (5) kufenförmig ausgebildet sind.

12. Kraftfahrzeug nach Anspruch 10, **dadurch gekennzeichnet, daß** die Führungseinrichtungen (5) in Form von Rollen vorgesehen sind.

13. Kraftfahrzeug nach einem der Ansprüche 10 bis 12, **dadurch gekennzeichnet, daß** die Form der Führungseinrichtungen (5) der Oberflächenform der Profilierung angepaßt ist, um im Falle eines Crashs eine möglichst geringe Flächenpressung zwischen diesen Bauteilen zu erhalten.

14. Kraftfahrzeug nach einem der Ansprüche 10 bis 13, **dadurch gekennzeichnet, daß** die Führungseinrichtungen (5) am Motor/Getriebekomplex (4) einstöckig ausgebildet sind oder dort mittels einer Befestigungseinrichtung (10) angebracht sind.

15. Kraftfahrzeug nach einem der Ansprüche 10 bis 14, **dadurch gekennzeichnet, daß** die Führungseinrichtungen (5) am Motor/Getriebekomplex (4) verschwenkbar vorgesehen sind.

16. Kraftfahrzeug nach einem der Ansprüche 10 bis 15, **dadurch gekennzeichnet, daß** die Führungseinrichtungen (5) jeweils in einer Vertiefung der Profilierung des Flächenabschnittes (3) zur Anlage gelangen.

## Claims

1. Motor vehicle, comprising:
- two longitudinal members (2) on the front part of the vehicle,
- an engine/gearbox complex (4), and
- an auxiliary frame (1) which is arranged transversely between the longitudinal members (2) of the front part of the vehicle and has a surface section (3) which is arranged in a manner such that it runs obliquely downwards and to the rear facing the engine/gearbox complex (4), in order to define a deflection plane for the engine/gearbox complex (4),
**characterized in that** the surface section (3) has a profiled structure running in the longitudinal direction of the motor vehicle.

2. Motor vehicle according to Claim 1, **characterized in that** the auxiliary frame (1) and the surface section (3) are of integral design.

3. Motor vehicle according to Claim 1 or 2, **characterized in that** the profiled structure is a corrugation.

4. Motor vehicle according to one of Claims 1 to 3, **characterized in that** the surface section (3) has a plurality of reinforcing ribs (6) on its rear side, which faces away from the engine/gearbox complex (4).

5. Motor vehicle according to one of Claims 1 to 4, **characterized in that** the auxiliary frame (1) is fastened on the rear side of the vehicle to a transverse-link point (E2) in which a pedal base (7), a sill, an A-pillar and the longitudinal members (2) intersect.

6. Motor vehicle according to Claim 5, **characterized in that** in the transverse-link point there is a form-fitting connection in each case between the auxiliary frame (1) and the longitudinal member (2).

7. Motor vehicle according to one of Claims 1 to 6, **characterized in that** a steering gear (8) is integrated in the auxiliary frame (1).

8. Motor vehicle according to one of Claims 1 to 7, **characterized in that** the auxiliary frame (1) serves as a mounting support for a steering gear (8) or a wheel guide (9).

9. Motor vehicle according to one of Claims 1 to 8, **characterized in that** the surface section (3) has, in the transverse direction of the motor vehicle, a minimum width (a) which corresponds to the clear distance between the link-holding points (E1).

10. Motor vehicle according to one of Claims 1 to 9, **characterized in that** a plurality of guide devices (5) is provided on the rear side of the engine/gearbox complex (4) facing the auxiliary frame (1), the said plurality of guide devices, in interaction with the profiled structure of the surface section (3), bringing about a predetermined shifting of the engine/gearbox complex (4) in a head-on crash of the motor vehicle.

11. Motor vehicle according to Claim 10, **characterized in that** the guide devices (5) are of skid-shaped design.

12. Motor vehicle according to Claim 10, **characterized in that** the guide devices (5) are provided in the form of rollers.

13. Motor vehicle according to one of Claims 10 to 12, **characterized in that** the shape of the guide devices (5) is matched to the surface shape of the profiled structure in order to obtain the smallest possible surface pressure between these components in the event of a crash.

14. Motor vehicle according to one of Claims 10 to 13, **characterized in that** the guide devices (5) are formed integrally on the engine/gearbox complex (4) or are fitted to it by means of a fastening device (10).

15. Motor vehicle according to one of Claims 10 to 14, **characterized in that** the guide devices (5) are provided pivotably on the engine/gearbox complex (4).

16. Motor vehicle according to one of Claims 10 to 15, **characterized in that** the guide devices (5) in each case come to rest in a depression in the profiled structure of the surface section (3).

## Revendications

1. Véhicule automobile qui comprend:
- deux supports longitudinaux (2) sur le châssis avant,
- un ensemble (4) de moteur/transmission et
- un châssis auxiliaire (1) qui est disposé transversalement entre les supports longitudinaux (2) du châssis avant et qui présente une partie (3) en forme de surface qui est tournée vers l'ensemble (4) de moteur/transmission en s'étendant obliquement vers le bas et l'arrière pour définir un plan oblique pour l'ensemble (4) de moteur/transmission,
**caractérisé en ce que**
la partie (3) en forme de surface présente une profilation qui s'étend dans le sens de la longueur du véhicule automobile.

2. Véhicule automobile selon la revendication 1, **caractérisé en ce que** le châssis auxiliaire (1) et la partie (3) en forme de surface sont réalisés d'une seule pièce.

3. Véhicule automobile selon la revendication 1 ou 2, **caractérisé en ce que** la profilation est une ondulation.

4. Véhicule automobile selon l'une quelconque des revendications 1 à 3, **caractérisé en ce que** la partie (3) en forme de surface présente une pluralité de nervures de renfort (6) sur son côté arrière qui n'est pas tourné vers l'ensemble (4) de moteur/transmission.

5. Véhicule automobile selon l'une quelconque des revendications 1 à 4, **caractérisé en ce que** le châssis auxiliaire (1) est fixé sur le côté arrière du véhicule en un point (E2) de bras de suspension sur lequel se coupent un plancher (7) de pédales, un seuil de porte, une colonne en A et le support longitudinal (2).

6. Véhicule automobile selon la revendication 5, **caractérisé en ce qu'**au point de bras de suspension, il existe une correspondance géométrique entre le châssis auxiliaire (1) et le support longitudinal (2).

7. Véhicule automobile selon l'une quelconque des revendications 1 à 6, **caractérisé en ce qu'**une transmission de direction (8) est intégrée dans le châssis auxiliaire (1).

8. Véhicule automobile selon l'une quelconque des revendications 1 à 7, **caractérisé en ce que** le châssis auxiliaire (1) sert de support de montage pour une transmission de direction (8) ou un guidage (9) des roues.

9. Véhicule automobile selon l'une quelconque des revendications 1 à 8, **caractérisé en ce que** dans la direction transversale du véhicule, la partie (3) en forme de surface présente une largeur minimale (a) qui correspond à la plus petite distance entre les points (E1) de réception des suspensions.

10. Véhicule automobile selon l'une quelconque des revendications 1 à 9, **caractérisé en ce qu'**une pluralité de dispositifs de guidage (5) qui ont pour effet un déplacement prédéterminé de l'ensemble (4) de moteur/transmission en cas de choc frontal sur le véhicule automobile en coopération avec la profilation de la partie (3) en forme de surface est prévue sur le côté arrière de l'ensemble (4) de moteur/transmission qui est tourné vers le châssis auxiliaire (1).

11. Véhicule automobile selon la revendication 10, **caractérisé en ce que** les dispositifs de guidage (5) sont configurés en forme de patins.

12. Véhicule automobile selon la revendication 10, **caractérisé en ce que** les dispositifs de guidage (5) sont prévus en forme de galets.

13. Véhicule automobile selon l'une quelconque des revendications 10 à 12, **caractérisé en ce que** la forme des dispositifs de guidage (5) est adaptée à la forme de la surface de la profilation pour, en cas d'accident, obtenir entre ces composants une poussée superficielle aussi faible que possible.

14. Véhicule automobile selon l'une quelconque des revendications 10 à 13, **caractérisé en ce que** les dispositifs de guidage (5) sont configurés d'un seul tenant avec l'ensemble (4) de moteur/transmission ou sont installés sur ce dernier au moyen d'un dispositif de fixation (10).

15. Véhicule automobile selon l'une quelconque des revendications 10 à 14, **caractérisé en ce que** les dispositifs de guidage (5) sont prévus sur l'ensemble (4) de moteur/transmission de manière à pouvoir pivoter.

16. Véhicule automobile selon l'une quelconque des revendications 10 à 15, **caractérisé en ce que** les dispositifs de guidage (5) viennent chacun se placer dans un creux de la profilation de la partie (3) en forme de surface.
